# EUROPEAN PATENT SPECIFICATION

(11) **EP 2 089 477 B1**
(45) Date of publication and mention of the grant of the patent: **06.06.2012**
(21) Application number: 07847670.2
(22) Date of filing: 03.12.2007
(51) Int. Cl.: C08L 101/00, C08G 83/00

(54) **FLAME RETARDANT COMPOSITION COMPRISING DENDRITIC POLYMERS**
FLAMMSCHUTZZUSAMMENSETZUNG, DIE DENDRITISCHE POLYMERE ENTHÄLT
COMPOSITION IGNIFUGE COMPORTANT DES POLYMÈRES DENDRITIQUES

(30) Priority: 12.12.2006 EP 06125924
(43) Date of publication of application: 19.08.2009
(73) Proprietor: BASF SE, 67056 Ludwigshafen (DE)
(72) Inventor: WERMTER, Hendrik, 65446 Eltville-Erbach (DE)
(86) International application number: PCT/EP2007/063159
(87) International publication number: WO 2008/071575

(56) References cited:
- EP-A- 1 424 360
- EP-A- 1 731 559
- WO-A-2006/040066
- WO-A2-2004/055029

## Description

The invention relates to novel flame retardant compositions comprising dendritic polymers and to the use thereof in polymers, preferably thermoplastic polymers.

Flame retardants are added to polymeric materials (synthetic or natural) to enhance the flame retardant properties of the polymers. Depending on their composition, flame retardants may act in the solid, liquid or gas phase either chemically, e.g. as a spumescent by liberation of nitrogen, and/or physically, e.g. by producing a foam coverage. Flame retardants interfere during a particular stage the combustion process, e.g. during heating, decomposition, ignition or flame spread.

US-A-4,010,137 discloses a process for the preparation of a melamine based flame retardant by a reaction in an extruder between a melamine comprising compound and a polyol with the optional addition of a polymeric carrier material. Melamine pyrophosphate and pentaerythritol are combined as single component flame retardants and heated in a vessel at 175°C - 275°C. A clear disadvantage of that process results from the fact that the preparation of the flame retardant requires a process time of at least 0.5 hours and up to 4 hours.

A process for the preparation of a melamine based flame retardant is disclosed in WO 00/68337. This reference discloses a process wherein powder blends comprising pentaerythritol and melamine phosphate are prepared. These powder blends, however, are strongly limited in their applicability for the manufacture of polymer compositions, which is caused by the fact that foaming occurs during the processing of the powder blend in the polymer, e.g. during the compounding or injection moulding.

A severe problem results from the fact that single component flame retardants that contain phosphoric ester groups are subject to hydrolysis. In the event that these flame retardant additives are blended with polymer materials, such as polypropylene, their moisture sensitivity causes considerable leaching of the flame retardant molecules from the polymer matrix resulting in reduced flame retardant efficiency of the polymer composition and decreased electrical insulation properties.

Various methods are known to increase the water resistance of polymeric flame retardant compositions. They include partial phosphorylation of polymers, such as polyvinyl acetate, encapsulation of polar flame retardant components, such as acid source APP particles with copolymer of vinyl pyrrolidone and comonomer, modification of flame retardants with surfactants (non-ionic or ionic) or the replacement of polyols (polar species) by other char formers, such as dialkyl tin oxide, dialkyl tin dialkoxide, or polyol(alkylcarbonate).

WO 2004/055029 discloses a process for the preparation of a melamine based flame retardant by a reaction of a melamine comprising compound and a polyol, wherein the melamine comprising compound is selected from the group consisting of melamine phosphate, melamine pyrophosphate and melamine polyphosphate and the polyol is selected from the group consisting of pentaerythritol, dipentaerythritol and tripentaerythritol. The reaction is carried out by reactive extrusion in an extruder in a molar ratio of the melamine comprising compound to the polyol between 1.0 : 1.0 and 4.0 : 1.0 and the reaction is performed at a temperature between 200° and 300°C

WO 2006/040066 A1 refers to flowable thermoplastic materials with halogen-free flame protection, the use of these materials as well as fibers, foils and moulded articles.

EP 1 424 360 A1 discloses a highly flowable polymer composition with branched flow enhancing additives and the use of this polymer.

The compositions obtained by the prior art process possess limited resistance in a water storage test at elevated temperatures (leaching test).

Object of the present invention is to provide an improved process for the preparation of a melamine based flame retardant and its master batch with high flowability.

A particular object of the invention is the preparation of polymeric flame retardant compositions of increased water resistance while preserving the flame retardant performance (UL94 V-0) and mechanical properties.

These objects are achieved by the invention; which relates to an intumescent flame retardant (INFR) obtainable by a reaction between a melamine comprising compound, a polyol and an additional polymeric component possessing more than 4 OH-functionalities with the optional addition of a polymeric carrier material. The melamine based flame retardant is particularly suitable for producing flame retardant polymer compositions of high water resistance. Due to the higher thermal stability of the melamine-based flame retardant, the polymer composition can be moulded at higher temperatures as compared to the polymer compositions disclosed in US-A-4,010,137*.*

The present invention relates to a product as obtained by reaction of:
a) At least one polyol selected from the group consisting of a linear or branched, trihydric or tetrahydric alcohol, a linear pentahydric or hexahydric alcohol, a linear or cyclic C₄-C₆aldose and a linear or cyclic C₄-C₆ketose;
b) At least one melamine comprising compound; and
c) At least one dendritic polymer substituted by hydroxy groups, wherein component a) is 10.0 to 50.0 wt.%, component b) is 40.0 to 80.0 wt.-%, and component c) is 0.1 to 10.0 wt.-%, present in the reaction product.

The general terms used in the description of the instant invention, unless defined otherwise, are defined as follows:

A linear or branched, trihydric alcohol is, for example, glycerol or trimethylolethane.

A linear tetrahydric alcohol is, for example, erythritol and its 3 isomeric forms, e.g. D-, L- and meso-erythritol.

A branched tetrahydric alcohol is, for example, pentaerythritol.

A linear, penta- or hexa-hydric alcohol is derived, for example, from linear pentitols, such as D(+)- and L(-)-arabitol, adonitol or xylitol, or from linear hexitols, such as D-sorbitol, D-mannitol or dulcitol.

A linear or cyclic C₄-C₆aldose and a linear or cyclic C₄-C₆ketose is derived, for example, from C₄aldoses, such as D(-)- and L(+)-erythrose or D(-)- and L(+)-threose, C₅aldoses, such as D(-)- and L(+)-arabinose, D(-)-ribose or D(+)-xylose, C₆aldoses, such as D(+)-glucose, D(+)-mannose or D(+)-galactose, or from a C₆ketose, such as fructose or L(-)-sorbose, and epimeric forms thereof.

The term melamine comprising compound comprises within its scope any compound wherein the melamine structure: 1,3,5-triazine-2,4,6-triamin (= cyanuric acid triamide) or condensates thereof are present. The definition applies to monomeric, oligomeric or polymeric compounds of melamine, condensates of melamine or condensates of melamine and phosphoric acid.

Preferred melamine comprising compounds are melamine cyanurate, melamine phosphate, dimelamine phosphate, melamine pyrophosphate, melamine polyphosphate, melamine borate, melamine ammonium phosphate, melamine ammonium polyphosphate, melamine ammonium pyrophosphate, melem, melam or melon or polyphosphates of melem, melam or melon.

Melamine comprising compounds of the type mentioned above are known. Some of them are commercially available.

A dendritic polymer substituted by hydroxy groups comprises within its scope any dendritic polymer including dendrimers, regular dendrons, dendrigrafts, or hyperbranched polymers. Dendritic polymers, including dendrimers and hyperbranched polymers, can be prepared by condensation, addition or ionic reactions of monomeric units having at least two different types of reactive groups.

The preparation and characterization of dendrimers, dendrons, dendrigrafts or hyperbranched polymers is known. Examples of dendrimers and dendrons and methods of synthesizing them are known from U.S. Patent Specification Nos. 4,507,466*;* 4,558,120*;* 4,568,737*;* 4,587,329*;* 4,632,337*;* 4,694,064*;* 4,713,975*;* 4,737,550*;* 4,871,779 and 4,857,599*.*

Examples of hyperbranched polymers and methods of synthesizing them are known from U. S. Patent Specification No. 5,418,301*.*

Some dendritic polymers are commercially available, e.g. Perstorp (www.perstorp.com).

Preferred dendritic polymers are dendrimers based on, for example, a polyester, polyether, polythioether, polyamide, polyetherketone, polyalkylene imine, polyamido amine, polyether amide, polyarylene, polyalkylene, aromatic polyalkylene, polyaryl acetylene and/or a phosphorus- or silicon-containing dendrimer or combinations thereof.

According to a preferred embodiment, dendritic polymers substituted by hydroxy groups are particularly suitable, which are commercially available from Perstorp under the trademark Boltorn®. These dendritic polymers are of polyester type consisting of a multifunctional core, from which branches extend to give a highly branched inherent structure with a large number of terminal hydroxy groups. The core consists of a polyalcohol, such as trimethylolpropane, pentaerythritol or derivatives thereof. The hyperbranched structure is built from 2,2-dimethyl-ol propionic acid (Bis-MPA). Suitable products are
- BOLTORN H 20 (16 terminal hydroxy groups, nominal molecular weight 1750 g/mol, amorphous, T_{g}: 25°C)
- BOLTORN H 2003 (12 terminal hydroxy groups, nominal molecular weight 2300 g/mol, partially fatty acid terminated, T_{g}: -5°C)
- BOLTORN H 2004 (6 terminal hydroxy groups, nominal molecular weight 3100 g/mol, T_{g}: -35°C, liquid at room temperature, viscosity 15 Pas at 23°C)
- BOLTORN H 30 (32 terminal hydroxy groups, nominal molecular weight 3600 g/mol, amorphous, T_{g}: 35°C)
- BOLTORN H 40 (64 terminal hydroxy groups, nominal molecular weight 7300 g/mol, amorphous, T_{g}: 40°C)

A representative structural formula of BOLTORN H 20 is given below:

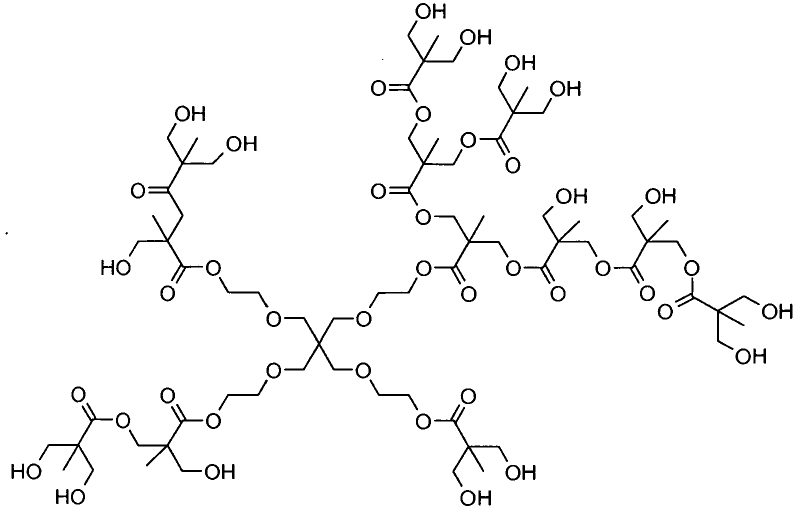

According to an alternative preferred embodiment, dendritic polymers substituted by hydroxy groups are particularly suitable, as described by P. Froehling, J. Polymer Science: Part A: Polymer Chemistry, Vol. 42, 3110-3115 (2004*).*

Suitable dendritic polymers are obtained from the starting reaction of a cyclic anhydride with diisopropanol amine, thus yielding a tertiary amide with one -COOH and two -OH groups, and subsequent polycondensation.

Suitable cyclic anhydrides are cis-1,2-cyclohexane-dicarboxylic anhydride (HHPA), cis-1,2-cyclohex-4-ene-dicarboxylic anhydride (THPA), phthalic anhydride, (PA), succinic anhydride (SA), 1-oct-2-ene-succinic anhydride (OSA) and glutaric anhydride (GA). Other amines, e.g. diisobutanolamine or dicyclohexanolamine, can be used, too.

These polymers are commercially available under the trademark Hybrane® from DSM Corporation (DSM HYBRANE, www.dsm.com). HYBRANE polymers have a broad molecular weight distribution. Molecular weights range from 1 000 to 10 000, with a polydispersity of 3-5. Suitable products are:
- HYBRANE P 1000 (phthalic anhydride + diisopropanolamine, 5.5 OH, MW: 800)
- HYBRANE S 1200 (phthalic anhydride + diisopropanolamine, 8 OH, MW: 1200)
- HYBRANE H 1500 (hexahydrophthalic anhydride + diisopropanolamine, 8 OH, MW: 1500)
- HYBRANE PS 2550 (phthalic anhydride + diisopropanolamine + stearic acid, 4 OH, 4 stearoyl, MW: 2500)

A representative structural formula of the core structure of a HYBRANE product obtainable from phthalic anhydride and diisopropanolamine is given below

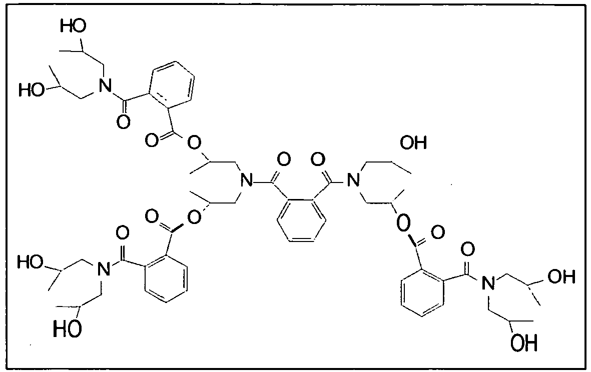

According to a preferred embodiment, the invention relates to a product as obtained by reaction of:
a) A linear or branched, trihydric or tetrahydric alcohol;
b) A melamine compound selected from the group consisting of melamine phosphate, melamine pyrophosphate and melamine polyphosphate; and
c) At least one dendritic polymer substituted by hydroxy groups.

According to a particularly preferred embodiment, the invention relates to a product as obtained by reaction of:
a) A tetrahydric alcohol selected from the group consisting of pentaerythritol and dipentaerythritol;
b) A melamine compound selected from the group consisting of melamine phosphate, melamine pyrophosphate and melamine polyphosphate; and
c) A dendritic polymer of the polyester or polyamide type substituted by hydroxy groups.

According to a highly preferred embodiment the invention relates to a product as obtained by reaction of:
a) A tetrahydric alcohol selected from the group consisting of pentaerythritol and dipentaerythritol;
b) A melamine compound selected from the group consisting of melamine phosphate and melamine pyrophosphate; and
c) A dendritic polymer of the polyester or polyamide type substituted by hydroxy groups.

According to a very highly preferred embodiment, the invention relates to a product as obtained by reaction of:
a) Pentaerythritol;
b) Melamine phosphate; and
c) A dendritic polyester formed from an initiator compound selected from the group consisting of trimethylolpropane, pentaerythritol and ethoxylated pentaerythritol and the chain-extending dimethylolpropionic acid or a polycondensation product of a cyclic carboxylic acid anhydride and diisopropanolamine.

The product according to the invention is obtainable by reactive mixing or compounding methods, particularly reactive extrusion methods, in customary mixing machines, wherein the components a), b) and c) and, optionally, further additives and polymers are mixed and melted. Suitable machines are known to those skilled in the art. They are predominantly mixers, kneaders and extruders.

The amounts of components a), b) and c) present in the reaction product may vary within wide limits. According to the invention the range of component a) is 10.0 to 50.0 wt.%, of component b) 40.0 - 80.0 wt.% and of component c) 0.1 to 10.0 wt.%.

According to a particularly preferred embodiment, the range of component a) is from 15.0 - 40.0 wt%, of component b) from 50.0 - 75.0 wt% and of component c) of 0.1 -10.0 wt%.

According to a highly preferred embodiment, the range of component a) is from 15.0 - 30.0 wt%, of component b) from 60.0 - 75.0 wt% and of component c) of 0.1 -10.0 wt%.

The product according to the invention is characterized by its excellent thermal stability. In the context of the description of the invention, thermal stability is defined as the degree of resistance against foaming upon heating of the melamine based flame retardant. For a more precise differentiation in thermal stability of flame retardant compositions physicochemical methods, such as thermo-gravimetric analysis (TGA) and differential scanning calorimetry (DSC), can be used.

The reaction of components a), b) and c) can be performed at temperatures between about 100°C and 300°C. However, for a complete conversion the reaction should be performed at temperatures higher than 200°C.

The maximum temperature for the reaction is chosen below 300°C. Preferably, the reaction is carried out in a temperature range between 220°C and 280°C. Between 220°C and 280°C a good balance is obtained between the rate of reaction and the degradation of the reaction product. More preferably, the reaction is conducted at a temperature between 230°C and 260°C. The thermal stability of the melamine based flame retardant produced in this temperature range is excellent.

The time period for reaction is, in general, between 1 minute and 1 hour, preferably 1 and 20 minutes.

The product of the invention is outstandingly suitable for imparting flame-retarding properties to polymers, e.g. synthetic polymers, especially thermoplastics. It has been found advantageous to add polymer material to the extruder as a carrier resin in addition to the components a), b) and c) defined above. A more constant extruder output is achieved with less than 30 weight% of polymer present in the flame retardant composition, especially when the extruder operates at temperatures below 270°C. The amount of the polymer in general should be kept low, e.g. between 5.0 - 30.0 weight, particularly between 5.0 - 20.0%, related to the total weight amount of the flame retardant composition.

In a preferred embodiment of the invention the extrusive reaction of components a), b) and c) is carried out in the presence of a polymer component, particularly 5.0 to 20.0 weight% of a polymer.

Any type of polymer material can be chosen that is suitable for melt processing at the extruder temperature, preferably at processing temperatures below 300°C. In general the polymer or carrier resin is chosen according to the polymer matrix material that needs flame retardation. Polypropylene and polyethylene are the first choice due to its large availability and easy processing properties. It has been found in this respect that through the use of high density polyethylene, HDPE, light coloured melamine based flame retardant pellets can be produced, which is advantageous for producing light coloured, flame retardant polymer compositions. In an alternative embodiment the use of polypropylene has been found advantageous. An acceptable colour of the flame retardant master batches is obtained, combined with high fluidity and excellent flame retardancy and mechanical properties of the composite material. Furthermore through the use of a polymer it is easier to obtain pellets of the melamine based flame retardant.

Other polymers suitable for the polymer composition of the present invention are those polymers, which are processed at temperatures below 300°C and preferably below 280°C.

A further embodiment of the invention is a flame retardant composition, which comprises
A) A product as obtained by reaction of:
   a) At least one polyol selected from the group consisting of a linear or branched, trihydric or tetrahydric alcohol, a linear pentahydric or hexahydric alcohol, a linear or cyclic C₄-C₆aldose and a linear or cyclic C₄-C₆ketose;
   b) At least one melamine comprising compound; and
   c) At least one dendritic polymer substituted by hydroxy groups; and
B) A polymer substrate.

A suitable polymer substrate according to Component B) consists of synthetic polymers, such as:
1. Polymers of mono- and di-olefins, for example polypropylene, polyisobutylene, polybutene-1, poly-4-methylpentene-1, polyvinylcyclohexane, polyisoprene or polybutadiene and also polymerisates of cyclo-olefins, for example of cyclopentene or norbornene; and also polyethylene (which may optionally be crosslinked), for example high density polyethylene (HDPE), high density polyethylene of high molecular weight (HDPE-HMW), high density polyethylene of ultra-high molecular weight (HDPE-UHMW), medium density polyethylene (MDPE), low density polyethylene (LDPE), and linear low density polyethylene (LLDPE), (VLDPE) and (ULDPE).
   Polyolefins, that is to say polymers of mono-olefins, as mentioned by way of example in the preceding paragraph, especially polyethylene and polypropylene, can be prepared by various processes, especially by the following methods:
   a) By free radical polymerisation (usually at high pressure and high temperature);
   b) In the presence of a catalyst. The catalyst usually contains one or more metals of Groups IVb, Vb, Vlb or VIII of the Periodic Table. Those metals generally have one or more substituents or ligands, such as oxides, halides, alcoholates, esters, ethers, amines, alkyls, alkenyls and/or aryls, which may be either π- or σ-coordinated. Such metal complexes may be free or fixed to carriers, for example to activated magnesium chloride, titanium(III) chloride, aluminium oxide or silicon oxide. Such catalysts may be soluble or insoluble in the polymerisation medium. The catalysts can be active as such in the polymerisation or further activators may be used, for example metal alkyls, metal hydrides, metal alkyl halides, metal alkyl oxides or metal alkyl oxanes. This applies particularly to metals of Group(s) la, IIa and/or IIIa. The activators may have been modified, for example, with further ester, ether, amine or silyl ether groups. Such catalyst systems are usually referred to as Phillips, Standard Oil Indiana, Ziegler (-Natta), TNZ (DuPont), metallocene or Single Site Catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, for example ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene co-polymers, ethylene/methylpentene copolymers, ethylene/heptene copolymers, ethylene/octene copolymers, ethylene/vinylcyclohexane copolymers, ethylene/cyclo-olefin copolymers, for example ethylene/norbornene (COC), ethylene/1-olefin copolymers wherein the 1-olefin is prepared *in situ,* propylene/butadiene copolymers, isobutylene/isoprene copolymers, ethylene/vinyl cyclohexene copolymers, ethylene/alkyl acrylate copolymers, ethylene/alkyl methacrylate copolymers, ethylene/vinyl acetate copolymers, ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropylene-ethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, for example polyamides.
4. Polystyrene, poly(p-methylstyrene), poly(α-methylstyrene).
5. Aromatic homopolymers and copolymers derived from vinyl-aromatic monomers, for example styrene, α-methylstyrene, all isomers of vinyltoluene, for example p-vinyltoluene, all isomers of ethylstyrene, propylstyrene, vinylbiphenyl, vinyl naphthalene, vinylanthracene and mixtures thereof; homopolymers and copolymers can have a syndiotactic, isotactic, hemi-isotactic or atactic stereo structure; preference is given to atactic polymers. Also included are stereo block polymers.
6. Homopolymers and copolymers can have a syndiotactic, isotactic, hemi-isotactic or atactic stereo structure; preference is given to atactic polymers. Also included are stereo block polymers.
   a) Copolymers including the already mentioned vinyl-aromatic monomers and comonomers selected from ethylene, propylene, dienes, nitriles, acids, maleic anhydrides, maleic acid amides, vinyl acetate, vinyl chloride and acrylic acid derivatives and mixtures thereof, for example styrene/butadiene, styrene/acrylo-nitrile, styrene/ethylene (interpolymers), styrene/alkyl methacrylate, styrene/butadiene/alkyl acrylate and methacrylate, styrene/maleic anhydride, styrene/acrylonitrile/methyl acrylate; high-impact-strength mixtures consisting of styrene copolymers and another polymer, for example a polyacrylate, a diene polymer or an ethylene/propylene/diene terpolymer; and also block copolymers of styrene, for example styrene/butadiene/styrene, styrene/isoprene/styrene, styrene/ethylenebutylene/styrene or styrene/ethylene-propylene/styrene.
   b) Hydrogenated aromatic polymers prepared by hydrogenation of the polymers mentioned under 6.), especially polycyclohexylethylene (PCHE), often also referred to as polyvinylcyclohexane (PVCH), which is prepared by hydrogenation of atactic polystyrene.
   c) Hydrogenated aromatic polymers prepared by hydrogenation of the polymers mentioned under 6a.).
7. Graft copolymers of vinyl-aromatic monomers, for example styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned above under Paragraph 6, such as those known, for example, as so-called ABS, MBS, ASA or AES polymers.
8. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
9. Copolymers of the monomers mentioned under Paragraph 9 with one another or with other unsaturated monomers, for example acrylonitrile/butadiene copolymers, acrylonitrile/alkyl acrylate copolymers, acrylonitrile/alkoxyalkyl acrylate copolymers, acrylonitrile/vinyl halide copolymers or acrylonitrile/alkyl methacrylate/butadiene terpolymers.
10. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Paragraph 1.
11. Homo- and co-polymers of cyclic ethers, such as polyalkylene glycols, polyethylene oxide, polypropylene oxide or copolymers thereof with bisglycidyl ethers.
12. Polyacetals, such as polyoxymethylene, and also those polyoxymethylenes which contain comonomers, for example ethylene oxide; polyacetals modified with thermoplastic polyurethanes, acrylates or MBS.
13. Polyphenylene oxides and sulphides and mixtures thereof with styrene polymers or polyamides.
14. Polyamides and copolyamides derived from diamines and dicarboxylic acids and/or from aminocarboxylic acids or the corresponding lactams, such as polyamide 4, polyamide 6, polyamide 6/6, 6/10, 6/9, 6/12, 4/6, 12/12, polyamide 11, polyamide 12, aromatic polyamides derived from m-xylene, diamine and adipic acid; polyamide 6/I (polyhexamethylene isophthalimide, MXD (m-xylylenediamine); polyamides prepared from hexamethylenediamine and iso- and/or tere-phthalic acid and optionally an elastomer as modifier, for example poly-2,4,4-trimethylhexamethylene terephthalamide or poly-m-phenylene isophthalamide. Block copolymers of the above-mentioned polyamides with polyolefins, olefin copolymers, ionomers or chemically bonded or grafted elastomers; or with polyethers, for example with polyethylene glycol, polypropylene glycol or polytetramethylene glycol. Also polyamides or copolyamides modified with EPDM or ABS; and polyamides condensed during processing ("RIM polyamide systems").
   Examples of polyamides and copolyamides that can be used are derived from, *inter alia*, ε-caprolactam, adipic acid, sebacic acid, dodecanoic acid, isophthalic acid, terephthalic acid, hexamethylenediamine, tetramethylenediamine, 2-methyl-pentamethylenediamine, 2,2,4-trimethylhexamethylenediamine, 2,4,4-trimethylhexamethylenediamine, m-xylylenediamine or bis(3-methyl-4-aminocyclohexyl)methane; and also semi-aromatic polyamides such as polyamide 66/6I, for example consisting of 70 - 95 % polyamide 6/6 and 5 - 30 % polyamide 6/I; and also tricopolymers in which some of the polyamide 6/6 has been replaced, for example consisting of 60 - 89 % polyamide 6/6, 5 - 30 % polyamide 6/1 and 1 - 10 % of another aliphatic polyamide; the latter may consist of, for example, polyamide 6, polyamide 11, polyamide 12 or polyamide 6/12 units. Such tricopolymers may accordingly be designated polyamide 66/6I/6, polyamide 66/6I/11, polyamide 66/6I/12, polyamide 66/6I/610 or polyamide 66/6I/612.
15. Polyureas, polyimides, polyamide imides, polyether imides, polyester imides, polyhydantoins and polybenzimidazoles.
16. Polyesters derived from dicarboxylic acids and dialcohols and/or from hydroxycarboxylic acids or the corresponding lactones, such as polyethylene terephthalate, polypropylene terephthalate, polybutylene terephthalate, poly-1,4-dimethylolcyclohexane terephthalate, polyalkylene naphthalate (PAN) and polyhydroxy-benzoates, and also block polyether esters derived from polyethers with hydroxyl terminal groups; and also polyesters modified with polycarbonates or MBS.
17. Polycarbonates and polyester carbonates.
18. Polyketones.
19. Polysulphones, polyether sulphones and polyether ketones.
20. Mixtures (polyblends) of the afore-mentioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermo-plastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

Preference is given to compositions wherein the thermoplastic polymer is polyethylene, polypropylene, high-impact polystyrene (HIPS), expandable polystyrene (EPS), expanded polystyrene (XPS), polyphenylene ether (PPE), polyamide, polyester, polycarbonate (PC) or a polymer blend of the type ABS (acrylonitrile-butadiene-styrene) or PC/ABS (polycarbonate/acrylonitrile-butadiene-styrene) or PPE/HIPS (polyphenylene ether/high-impact polystyrene), especially a polyamide, polyester or a PPE/HIPS blend.

Special preference is given to polymer compositions according to the invention that comprise a filler or a reinforcing agent, e.g. filled polyethylene, polystyrene and especially talc filled polypropylene.

A preferred embodiment of the invention relates flame retardant composition, which comprises
A) A product as obtained by reaction of
   a) A tetrahydric alcohol selected from the group consisting of pentaerythritol and dipentaerythritol;
   b) A melamine compound selected from the group consisting of melamine phosphate and melamine pyrophosphate; and
   c) A dendritic polymer of the polyester or polyamide type substituted by hydroxy groups, and
B) A thermoplastic polymer substrate.

A highly preferred embodiment relates to a flame retardant composition, which comprises
A) A product as obtained by reaction of
   a) Pentaerythritol;
   b) Melamine phosphate; and
   c) A dendritic polyester formed from an initiator compound selected from the group consisting of trimethylolpropane, pentaerythritol and ethoxylated pentaerythritol and the chain-extending dimethylolpropionic acid or a polycondensation product of a cyclic carboxylic acid anhydride and diisopropanolamine; and
B) A thermoplastic polymer substrate selected from the group consisting of polyethylene, polypropylene and high impact polystyrene.

The instant invention further pertains to a composition, which comprises, in addition to the product as obtained by reacting components a), b) and c), as defined above, d) further additives selected from the group consisting of polymer stabilizers and additional flame-retardants, such as phosphorus containing flame-retardants, further nitrogen containing flame-retardants, halogenated flame-retardants and inorganic flame-retardants.

Stabilizers are preferably halogen-free and selected from nitroxyl stabilizers, nitrone stabilizers, amine oxide stabilizers, benzofuranone stabilizers, phosphite and phosphonite stabilizers, quinone methide stabilizers and monoacrylate esters of 2,2'-alkylidenebisphenol stabilizers.

Additional flame-retardants as of present component d) are known components, items of commerce or can be obtained by known methods.

Representative phosphorus containing flame-retardants, in addition to the melamine compounds defined above with regard to component b), are for example:

Tetraphenyl resorcinol diphosphite (FYROLFLEX^{®} RDP, Akzo Nobel), tetrakis(hydroxymethyl)phosphonium sulphide, triphenyl phosphate, diethyl-N,N-bis(2-hydroxyethyl)-aminomethyl phosphonate, hydroxyalkyl esters of phosphorus acids, ammonium polyphosphate (APP) or (HOSTAFLAM^{®} AP750), resorcinol diphosphate oligomer (RDP), phosphazene flame-retardants and ethylenediamine diphosphate (EDAP).

Further nitrogen containing flame-retardants are, for example, isocyanurate flame-retardants, such as polyisocyanurate, esters of isocyanuric acid or isocyanurates. Representative examples are hydroxyalkyl isocyanurates, such as tris-(2-hydroxyethyl)isocyanurate, tris(hydroxymethyl)isocyanurate, tris(3-hydroxy-n-proyl)isocyanurate or triglycidyl isocyanurate.

Further examples are: benzoguanamine, tris(hydroxyethyl) isocyanurate, allantoin, glycoluril, melamine cyanurate, urea cyanurate or ammonium polyphosphate.

Representative organohalogen flame-retardants are, for example:

Polybrominated diphenyl oxide (DE-60F, Great Lakes Corp.), decabromodiphenyl oxide (DBDPO; SAYTEX^{®} 102E), tris[3-bromo-2,2-bis(bromomethyl)propyl] phosphate (PB 370^{®}, FMC Corp.), tris(2,3-dibromopropyl)phosphate, tris(2,3-dichloropropyl)phosphate, chlorendic acid, tetrachlorophthalic acid, tetrabromophthalic acid, poly-β-chloroethyl triphosponate mixture, bis(2,3-dibromopropyl ether) (PE68), brominated epoxy resin, ethylene-bis(tetrabromophthalimide) (SAYTEX^{®} BT-93), bis(hexachlorocyclopentadieno)cyclooctane (DECLORANE PLUS^{®}), chlorinated paraffins, octabromodiphenyl ether, hexachlorocyclopentadiene derivatives, 1,2-bis(tribromophenoxy)ethane (FF680), tetrabromo-bisphenol A (SAYTEX^{®} RB100), ethylene bis-(dibromo-norbornanedicarboximide) (SAYTEX^{®} BN-451), bis-(hexa-chlorocycloentadeno) cyclooctane, PTFE, tris-(2,3-dibromopropyl)-isocyanurate, and ethylene-bis-tetrabromophthalimide.

The flame-retardant mentioned above routinely combined with inorganic (hydr)oxide synergists. Most common for this use are aluminum (hydr)oxide, such as Al(OH)₃ or AlOOH, magnesium hydroxide, zinc or antimony oxides, e.g. Sb₂O₃ or Sb₂O₅. Boron compounds and silicates are suitable, too.

As mentioned above, the composition according to the invention may additionally contain one or more conventional additives, for example selected from pigments, dyes, plasticizers, antioxidants, thixotropic agents, levelling assistants, basic co-stabilizers, metal passivators, metal oxides, organophosphorus compounds, further light stabilizers and mixtures thereof, especially pigments, phenolic antioxidants, calcium stearate, zinc stearate, UV absorbers of the 2-hydroxy-benzophenone, 2-(2'-hydroxyphenyl)benzotriazole and/or 2-(2-hydroxyphenyl)-1,3,5-triazine groups.

A further embodiment of the invention relates to a process for the preparation of a melamine based flame retardant composition by reaction of a polyol and a melamine comprising compound, *characterized in that*
a) At least one polyol selected from the group consisting of a linear or branched, trihydric or tetrahydric alcohol, a linear pentahydric or hexahydric alcohol, a linear or cyclic C₄-C₆aldose and a linear or cyclic C₄-C₆ketose;
b) At least one melamine comprising compound; and
c) At least one dendritic polymer substituted by hydroxy groups;
are reacted in the presence of polymers and, optionally, further processed.

The present invention accordingly relates also to the use of the flame retardants according to the invention for imparting flame-resistant properties to synthetic polymers, especially to thermoplastics, and also to a method of imparting flame-resistant properties to synthetic polymers, wherein at least one flame retardant according to the invention is incorporated in the synthetic polymers or is applied to their surface.

The incorporation of the reaction product which comprises components a), b) and c), as defined above, and optional further components into the polymer component B) is carried out by known methods such as dry blending in the form of a powder, or wet mixing in the form of solutions, dispersions or suspensions for example in an inert solvent, water or oil. The additive components a), b) and c) and optional further additives may be incorporated, for example, before or after molding or also by applying the dissolved or dispersed additive or additive mixture to the polymer material, with or without subsequent evaporation of the solvent or the suspension/dispersion agent. They may be added directly into the processing apparatus (e.g. extruders, internal mixers, etc.), e.g. as a dry mixture, pellets or powder, or as a solution or dispersion or suspension or melt.

The addition of the additive components to the polymer component B) can be carried out in all customary mixing machines in which the polymer is melted and mixed with the additives. Suitable machines are known to those skilled in the art. They are predominantly mixers, kneaders and extruders.

Particularly preferred processing machines are twin-screw extruders, e.g. contra-rotating or co-rotating twin-screw extruders. Other processing machines are planetary-gear extruders, ring extruders or co-kneaders. It is also possible to use processing machines provided with at least one gas or vapour removal compartment to which a vacuum can be applied.

Suitable extruders and kneaders are described, for example, in Handbuch der Kunststoffex-trusion, Vol. 1 Grundlagen, Editors F. Hensen, W. Knappe, H. Potente, 1989, pp. 3-7, ISBN:3-446-14339-4 *(*Vol. 2 Extrusionsanlagen 1986, ISBN 3-446-14329-7*).*

For example, the screw length is 1 - 60 screw diameters, preferably 35-48 screw diameters. The rotational speed of the screw is preferably 10 - 600 rotations per minute (rpm), very particularly preferably 25 - 300 rpm.

The maximum throughput is dependent on the screw diameter, the rotational speed and the driving force. The process of the present invention can also be carried out at a level lower than maximum throughput by varying the parameters mentioned or employing weighing machines delivering dosage amounts.

If a plurality of components is added, these can be premixed or added individually.

The additive components a), b) and c) and optional further additives can also be added to the polymer in the form of a master batch ("concentrate"). In such operations, the polymer can be used in the form of powder, granules, solutions, and suspensions or in the form of lattices.

Incorporation can take place prior to or during the shaping operation. The materials containing the additives of the invention described herein preferably are used for the production of molded articles, for example roto-molded articles, injection molded articles, profiles and the like, and especially a fiber, spun melt non-woven, film or foam.

Thus, present invention further pertains to molded or extruded articles, such as pipes, wire and cables, fibers, spun melt non-woven or a foam comprising the composition of the invention.

The following Examples illustrate the invention (percentages in weight percent):

### Examples

### Example 1: Referential Compositions according to WO2004/055029

Melamine phosphate (Melapur®, MP) and pentaerythritol are premixed in a high shear mixer at a molar ratio of 1.8 : 1.0. The premix obtained is fed to a twin-screw extruder (Φ=25 mm; L/D=42; fitted with a vacuum degassing), which operates at a screw speed of 20-100 rotations per minute. Additional polypropylene (PP, Moplen®HF 500 N, Basell) is fed to the extruder in a PP concentration of 15 wt% (compare Table I). The average temperature in the extruder is 230-260°C, and the residence time is between 1 and 4 minutes, on average 2.5 minutes. To finalize the reaction between melamine phosphate and pentaerythritol, the extrudate obtained is cut into pellets and dried before carrying out a subsequent extrusion at 230-260°C.

### Example 2: Inventive Compositions

Melamine phosphate, pentaerythritol, and the dendritic polymer substituted by hydroxy groups, component c), are premixed according to the values given in Table 1. The materials are processed in a manner analogous to the one of Example I.

**Table 1: Composition of melamine based flame retardants**

| Melamine based flame retardant Obtained according to | Stabilized Moplen® H F 500 N | Pentaerythritol | Melapur® MP | Boltorn® H-20 | Boltorn® H-30 | Hybrane® P-1000 |
|---|---|---|---|---|---|---|
| | [%] | [%] | [%] | [%] | [%] | [%] |
| Referential Composition 1 | 15 | 21.45 | 63.55 | - | - | - |
| Referential Composition 2 | 12.5 | 22.08 | 65.42 | - | - | - |
| Inventive Composition 1 | 15 | 20.71 | 61.36 | 2.93 | - | - |
| Inventive Composition 2 | 15 | 20.71 | 61.36 | - | - | 2.93 |
| Inventive Composition 3 | 12.5 | 24.54 | 60.59 | - | - | 2.37 |
| Inventive Composition 4 | 12.5 | 23.57 | 62.06 | - | - | 1.87 |
| Inventive Composition 5 | 12.5 | 23.57 | 62.06 | 1.87 | - | - |
| Inventive Composition 6 | 12.5 | 23.57 | 62.06 | - | 1.87 | - |

The pellets obtained according to Examples 1 and 2 are compounded in a twin-screw extruder (Φ=25 mm; UD=42) with pre-stabilized (0.3% IRGANOX B 225, 0.05% Ca-Stearate) PP (Moplen®HF 500 N) in such amounts that the resulting pellets contain 70% stabilized PP and 30% of the sum of components a) and b), according to the referential compositions, and components a), b) and c), according to the inventive compositions.

UL bars (1.6 mm) are prepared by injection molding of the pellets obtained. The UL 94-V test is carried out according to (DIN EN 60695-11-10). Additionally, after storage for one week in 70°C hot water (leaching test, compare UL 746C) the UL 94-V test is carried out. Table 2 contains the data for the weight loss due to the leaching test as well.

**Table 2: FR results before and after leaching test**

| Melamine based flame retardant Obtained according to | UL-94 Classification | Weight loss due to leaching [%] | % V-1 Classification according to UL-94 test after leaching | Burning time after first flaming (after leaching) [%] |
|---|---|---|---|---|
| Referential Composition 1 | V-0 | 11.5 | 0% V-1 | 677 |
| Referential Composition 2 | V-0 | 10.0 | 0% V-1 | 660 |
| Inventive Composition 1 | V-0 | 5.3 | 40% V-1 | 15 |
| Inventive Composition 2 | V-0 | 4.2 | 60% V-1 | 6 |
| Inventive Composition 3 | V-0 | 3.5 | 100% V-0 | 2 |
| Inventive Composition 4 | V-0 | 1.21 | 100% V-1 | 7 |
| Inventive Composition 5 | V-0 | 4.0 | 80% V-1 | 8 |
| Inventive Composition 6 | V-0 | 4.0 | 80% V-1 | 17 |

Before leaching all samples achieve the best UL-94 classification: V-0. In comparison with the Referential Compositions 1 and 2 all compositions according to the invention (Inventive Compositions 1-6) exhibit a significantly reduced weight loss due to leaching. The FR properties of the inventive compositions after leaching are improved, as reflected in the reduced values for the total burning times (5 bars, two times ignited) and the increased percentage (5 bars) of V-1 (according to UL-94) classification.

## Claims

1. A product as obtained by reaction of:
a) at least one polyol selected from the group consisting of a linear or branched, trihydric or tetrahydric alcohol, a linear pentahydric or hexahydric alcohol, a linear or cyclic C₄-C₆ aldose and a linear or cyclic C₄-C₆ ketose;
b) at least one melamine comprising compound; and
c) at least one dendritic polymer substituted by hydroxy groups,
wherein
component a) is 10.0 to 50.0 wt.-%,
component b) is 40.0 to 80.0 wt.-%, and
component c) is 0.1 to 10.0 wt.-%,
present in the reaction product.

2. A product according to claim 1 as obtained by reaction of:
a) a linear or branched, trihydric or tetrahydric alcohol;
b) a melamine compound selected from the group consisting of melamine phosphate, melamine pyrophosphate and melamine polyphosphate; and
c) at least one dendritic polymer substituted by hydroxy groups.

3. A product according to claim 1 as obtained by reaction of:
a) a tetrahydric alcohol selected from the group consisting of pentaerythritol and dipentaerythritol;
b) a melamine compound selected from the group consisting of melamine phosphate, melamine pyrophosphate and melamine polyphosphate; and
c) a dendritic polymer of the polyester or polyamide type substituted by hydroxy groups.

4. A product according to claim 1 as obtained by reaction of:
a) a tetrahydric alcohol selected from the group consisting of pentaerythritol and dipentaerythritol;
b) a melamine compound selected from the group consisting of melamine phosphate and melamine pyrophosphate; and
c) a dendritic polymer of the polyester or polyamide type substituted by hydroxy groups.

5. A product according to claim 1 as obtained by reaction of:
a) pentaerythritol;
b) melamine phosphate; and
c) a dendritic polyester formed from an initiator compound selected from the group consisting of trimethylolpropane, pentaerythritol and ethoxylated pentaerythritol and the chain-extending dimethylolpropionic acid or a polycondensation product of a cyclic carboxylic acid anhydride and diisopropanolamine.

6. A flame retardant composition according to claim 1, which comprises
A) a product as obtained by reaction of:
a) at least one polyol selected from the group consisting of a linear or branched, trihydric or tetrahydric alcohol, a linear pentahydric or hexahydric alcohol, a linear or cyclic C₄-C₆ aldose and a linear or cyclic C₄-C₆ ketose;
b) at least one melamine comprising compound; and c) At least one dendritic polymer substituted by hydroxy groups;
and
B) a polymer substrate.

7. A flame retardant composition according to claim 6, which comprises
A) a product as obtained by reaction of
a) a tetrahydric alcohol selected from the group consisting of pentaerythritol and dipentaerythritol;
b) a melamine compound selected from the group consisting of melamine phosphate and melamine pyrophosphate; and
c) a dendritic polymer of the polyester or polyamide type substituted by hydroxy groups, and
B) a thermoplastic polymer substrate.

8. A flame retardant composition according to claim 6, which comprises
A) a product as obtained by reaction of
a) pentaerythritol;
b) melamine phosphate; and
c) a dendritic polyester formed from an initiator compound selected from the group consisting of trimethylolpropane, pentaerythritol and ethoxylated pentaerythritol and the chain-extending dimethylolpropionic acid or a polycondensation product of a cyclic carboxylic acid anhydride and diisopropanolamine;
and
B) a thermoplastic polymer substrate selected from the group consisting of polyethylene, polypropylene and high impact polystyrene.

9. A flame retardant composition according to claim 6, which comprises
d) further additives in addition to components a), b) and c) selected from the group consisting of polymer stabilizers and additional flame-retardants.

10. Formed articles comprising the flame retardant composition according to claim 6.

11. A process for the preparation of a melamine-based flame retardant composition by reaction of a polyol and a melamine comprising compound, **characterized in that**
a) at least one polyol selected from the group consisting of a linear or branched, trihydric or tetrahydric alcohol, a linear pentahydric or hexahydric alcohol, a linear or cyclic C₄-C₆ aldose and a linear or cyclic C₄-C₆ ketose;
b) at least one melamine comprising compound; and
c) at least one dendritic polymer substituted by hydroxy groups; are reacted in the presence of further polymers, wherein component a) is 10.0 to 50.0 wt.-% component b) is 40.0 to 80.0 wt.%, and component c) is 0.1 to 10.0 wt.%, present in the reaction product.

12. A process according to claim 11, **characterized in that** components a), b) and c) are reacted in the presence of thermoplastic polymers by reactive extrusion methods.

13. A process according to claim 12, **characterized in that** components a), b) and c) are reacted in the presence of thermoplastic polymers in a twin-screw extruder.

14. A process for imparting flame retardancy to a polymer, which process comprises the incorporation of a product according to claim 1 to the polymer.

## Patentansprüche

1. Produkt, erhalten durch Umsetzung von:
a) mindestens einem Polyol aus der Gruppe bestehend aus einem linearen oder verzweigten, drei- oder vierwertigen Alkohol, einem linearen fünf- oder sechswertigen Alkohol, einer linearen oder cyclischen C₄-C₆-Aldose und einer linearen oder cyclischen C₄-C₆-Ketose;
b) mindestens einer Melamin umfassenden Verbindung und
c) mindestens einem durch Hydroxygruppen substituierten dendritischen Polymer,
wobei in dem Reaktionsprodukt
Komponente a) in einer Menge von 10,0 bis 50,0 Gew.-%,
Komponente b) in einer Menge von 40,0 bis 80,0 Gew.-% und
Komponente c) in einer Menge von 0,1 bis 10,0 Gew.-%
vorliegt.

2. Produkt nach Anspruch 1, erhalten durch Umsetzung von:
a) einem linearen oder verzweigten, drei- oder vierwertigen Alkohol;
b) einer Melaminverbindung aus der Gruppe bestehend aus Melaminphosphat, Melaminpyrophosphat und Melaminpolyphosphat und
c) mindestens einem durch Hydroxygruppen substituierten dendritischen Polymer.

3. Produkt nach Anspruch 1, erhalten durch Umsetzung von:
a) einem vierwertigen Alkohol aus der Gruppe bestehend aus Pentaerythrit und Dipentaerythrit;
b) einer Melaminverbindung aus der Gruppe bestehend aus Melaminphosphat, Melaminpyrophosphat und Melaminpolyphosphat und
c) einem durch Hydroxygruppen substituierten dendritischen Polymer vom Polyester- oder Polyamid-Typ.

4. Produkt nach Anspruch 1, erhalten durch Umsetzung von:
a) einem vierwertigen Alkohol aus der Gruppe bestehend aus Pentaerythrit und Dipentaerythrit;
b) einer Melaminverbindung aus der Gruppe bestehend aus Melaminphosphat und Melaminpyrophosphat und
c) einem durch Hydroxygruppen substituierten dendritischen Polymer vom Polyester- oder Polyamid-Typ.

5. Produkt nach Anspruch 1, erhalten durch Umsetzung von:
a) Pentaerythrit;
b) Melaminphosphat und
c) einem dendritischen Polyester, gebildet aus einer Starterverbindung aus der Gruppe bestehend aus Trimethylolpropan, Pentaerythrit und ethoxyliertem Pentaerythrit und der kettenverlängernden Dimethylolpropionsäure oder einem Polykondensationsprodukt von einem cyclischen Carbonsäureanhydrid und Diisopropanolamin.

6. Flammwidrige Zusammensetzung nach Anspruch 1, die
A) ein Produkt, erhalten durch Umsetzung von:
a) mindestens einem Polyol aus der Gruppe bestehend aus einem linearen oder vierzweigten, drei- oder vierwertigen Alkohol, einem linearen fünf- oder sechswertigen Alkohol, einer linearen oder cyclischen C₄-C₆-Aldose und einer linearen oder cyclischen C₉-C₆-Ketose;
b) mindestens einer Melamin umfassenden Verbindung und
c) mindestens einem durch Hydroxygruppen substituierten dendritischen Polymer; und
B) ein Polymersubstrat
umfasst.

7. Flammwidrige Zusammensetzung nach Anspruch 6, die
A) ein Produkt, erhalten durch Umsetzung von:
a) einem vierwertigen Alkohol aus der Gruppe bestehend aus Pentaerythrit und Dipentaerythrit;
b) einer Melaminverbindung aus der Gruppe bestehend aus Melaminphosphat und Melaminpyrophosphat und
c) einem durch Hydroxygruppen substituierten dendritischen Polymer vom Polyester- oder Polyamid-Typ; und
B) ein thermoplastisches Polymersubstrat umfasst.

8. Flammwidrige Zusammensetzung nach Anspruch 6, die
A) ein Produkt, erhalten durch Umsetzung von:
a) Pentaerythrit;
b) Melaminphosphat und
c) einem dendritischen Polyester, gebildet aus einer Starterverbindung aus der Gruppe bestehend aus Trimethylolpropan, Pentaerythrit und ethoxyliertem Pentaerythrit und der kettenverlängernden Dimethylolpropionsäure oder einem Polykondensationsprodukt von einem cyclischen Carbonsäureanhydrid und Diisopropanolamin; und
B) ein thermoplastisches Polymersubstrat aus der Gruppe bestehend aus Polyethylen, Polypropylen und schlagzähem Polystyrol
umfasst.

9. Flammwidrige Zusammensetzung nach Anspruch 6, die
d) neben den Komponenten a), b) und c) weitere Additive aus der Gruppe bestehend aus Polymerstabilisatoren und zusätzlichen Flammschutzmitteln
umfasst.

10. Formkörper, umfassend die Flammschutzzusammensetzung nach Anspruch 6.

11. Verfahren zur Herstellung einer flammwidrigen Zusammensetzung auf Melaminbasis durch Umsetzung eines Polyols und einer Melamin umfassenden Verbindung, **dadurch gekennzeichnet, dass** man
a) mindestens ein Polyol aus der Gruppe bestehend aus einem linearen oder verzweigten, drei- oder vierwertigen Alkohol, einem linearen fünf- oder sechswertigen Alkohol, einer linearen oder cyclischen C₄-C₆-Aldose und einer linearen oder acyclischen C₄-C₆-Ketose;
b) mindestens eine Melamin umfassende Verbindung und
c) mindestens ein durch Hydroxygruppen substituiertes dendritisches Polymer
in Gegenwart von weiteren Polymeren umsetzt,
wobei in dem Reaktionsprodukt
Komponente a) in einer Menge von 10,0 bis 50,0 Gew.-%,
Komponente b) in einer Menge von 40,0 bis 80,0 Gew.-% und
Komponente c) in einer Menge von 0,1 bis 10,0 Gew.-%
vorlegt.

12. Verfahren nach Anspruch 11, **dadurch gekennzeichnet, dass** man die Komponenten a), b) und c) nach Reaktivextrusionsmethoden in Gegenwart von thermoplastischen Polymeren umsetzt.

13. Verfahren nach Anspruch 12, **dadurch gekennzeichnet, dass** man die Komponenten a), b) und c) in einem Doppelschneckenextruder in Gegenwart von thermoplastischen Polymeren umsetzt.

14. Verfahren zur flammwidrigen Ausrüstung eines Polymers, bei dem man in das Polymer ein Produkt nach Anspruch 1 einarbeitet.

## Revendications

1. Produit obtenu par la réaction de :
a) au moins un polyol choisi dans le groupe constitué par un alcool linéaire ou ramifié à trois ou quatre groupements hydroxy, un alcool linéaire à cinq ou six groupements hydroxy, un aldose linéaire ou cyclique en C₄-C₆ et un cétose linéaire ou cyclique en C₄-C₆ ;
b) au moins un composé comprenant de la mélanine ; et
c) au moins un polymère dendritique substitué par des groupements hydroxy,
où
le composant a) est inclus à une teneur comprise entre 10,0 et 50,0 % en masse,
le composant b) est inclus à une teneur comprise entre 40,0 et 80,0 % en masse, et
le composant c) est inclus à une teneur comprise entre 0,1 et 10,0 % en masse,
présents dans le produit de réaction.

2. Produit conforme à la revendication 1, tel qu'obtenu par la réaction de :
a) un alcool linéaire ou ramifié à trois ou quatre groupements hydroxy ;
b) un dérivé de mélamine choisi dans le groupe constitué par le phosphate de mélamine, le pyrophosphate de mélamine et le polyphosphate de mélamine ; et
c) au moins un polymère dendritique substitué par des groupements hydroxy.

3. Produit conforme à la revendication 1, tel qu'obtenu par la réaction de :
a) un alcool à quatre groupements hydroxy choisi dans le groupe constitué par le pentaérythritol et le dipentaérythritol ;
b) un dérivé de mélamine choisi dans le groupe constitué par le phosphate de mélamine, le pyrophosphate de mélamine et le polyphosphate de mélamine ; et
c) un polymère dendritique de type polyester ou polyamide substitué par des groupements hydroxy.

4. Produit conforme à la revendication 1, tel qu'obtenu par la réaction de :
a) un alcool à quatre groupements hydroxy choisi dans le groupe constitué par le pentaérythritol et le dipentaérythritol ;
b) un dérivé de mélamine choisi dans le groupe constitué par le phosphate de mélamine et le pyrophosphate de mélamine ; et
c) un polymère dendritique de type polyester ou polyamide substitué par des groupements hydroxy.

5. Produit conforme à la revendication 1, tel qu'obtenu par la réaction de :
a) le pentaérythritol ;
b) le phosphate de mélamine ; et
c) un polyester dendritique formé par un composé initiateur choisi dans le groupe constitué par le triméthylolpropane, le pentaérythritol et le pentaérythritol éthoxylé et par un agent d'extension de chaîne, l'acide diméthylolpropionique, ou un produit de polycondensation d'un anhydride d'acide carboxylique cyclique et de la diisopropanolamine.

6. Composition ignifugeante conforme à la revendication 1, qui comprend
A) un produit obtenu par la réaction de :
a) au moins un polyol choisi dans le groupe constitué par un alcool linéaire ou ramifié à trois ou quatre groupements hydroxy, un alcool linéaire à cinq ou six groupements hydroxy, un aldose linéaire ou cyclique en C₄-C₆ et un cétose linéaire ou cyclique en C₄-C₆ ;
b) au moins un composé comprenant de la mélamine ; et
c) au moins un polymère dendritique substitué par des groupements hydroxy ;
et
B) un substrat polymère.

7. Composition ignifugeante conforme à la revendication 6, qui comprend
A) un produit obtenu par la réaction de :
a) un alcool à quatre groupements hydroxy choisi dans le groupe constitué par le pentaérythritol et le dipentaérythritol ;
b) un dérivé de mélamine choisi dans le groupe constitué par le phosphate de mélamine et le pyrophosphate de mélamine ; et
c) un polymère dendritique de type polyester ou polyamide substitué par des groupements hydroxy, et
B) un substrat polymère thermoplastique.

8. Composition ignifugeante conforme à la revendication 6, qui comprend
A) un produit obtenu par la réaction de :
a) le pentaérythritol ;
b) le phosphate de mélamine ; et
c) un polyester dendritique formé par un composé initiateur choisi dans le groupe constitué par le triméthylolpropane, le pentaérythritol et le pentaerythritol éthoxylé et par un agent d'extension de chaîne, l'acide diméthylolpropionique, ou un produit de polycondensation d'un anhydride d'acide carboxylique cyclique et de la diisopropanolamine ;
et
B) un substrat polymère thermoplastique choisi dans le groupe constitué par le polyéthylène, le polypropylène et le polystyrène à haute résistance aux chocs.

9. Composition ignifugeante conforme à la revendication 6, qui comprend
d) des adjuvants supplémentaires en plus des composants a), b) et c), choisis dans le groupe constitué par les stabilisants polymères et des ignifugeants supplémentaires.

10. Articles mis en forme comprenant la composition ignifugeante conforme à la revendication 6.

11. Procédé d'élaboration d'une composition ignifugeante à base de mélamine par réaction d'un polyol et d'un composé comprenant de la mélamine, **caractérisé en ce que**
a) au moins un polyol choisi dans le groupe constitué par un alcool linéaire ou ramifié à trois ou quatre groupements hydroxy, un alcool linéaire à cinq ou six groupements hydroxy, un aldose linéaire ou cyclique en C₄-C₆ et un cétose linéaire ou cyclique en C₄-C₆ :
b) au moins un composé comprenant de la mélamine ; et
c) au moins un polymère dendritique substitué par des groupements hydroxy ;
réagissent en présence de polymères supplémentaires,
où
le composant a) est inclus à une teneur comprise entre 10,0 et 50,0 % en masse,
le composant b) est inclus à une teneur comprise entre 40,0 et 80,0 % en masse, et
le composant c) est inclus à une teneur comprise entre 0,1 et 10,0 % en masse,
sont présents dans le produit de réaction.

12. Procédé conforme à la revendication 11, **caractérisé en ce que** les composants a), b) et c) réagissent en présence de polymères thermoplastiques par des méthodes d'extrusion réactive.

13. Procédé conforme à la revendication 12, **caractérisé en ce que** les composants a), b) et c) réagissent en présence de polymères thermoplastiques dans une extrudeuse double vis.

14. Procédé permettant de conférer des propriétés ignifugeantes à un polymère, ledit procédé comprenant l'incorporation d'un produit conforme à la revendication 1 audit polymère.
